# FASCICULE DE BREVET EUROPEEN

(11) **EP 1 900 303 B1**
(45) Date de publication et mention de la délivrance du brevet: **30.05.2012**
(21) Numéro de dépôt: 07291087.0
(22) Date de dépôt: 11.09.2007
(51) Int. Cl.: A47B 47/02, F16B 12/34

(54) **Feuille de matériau de construction**
Blatt für Baumaterial
Sheet of construction material

(30) Priorité: 13.09.2006 FR 0607986
(43) Date de publication de la demande: 19.03.2008
(73) Titulaire: Etablissements DECAYEUX Société par actions simplifiée, 80210 Feuquières-en-Vimeu (FR)
(72) Inventeur: Decayeux, Etienne, 80210 Feuquières-en-Vimeu (FR); Deceuvelaere, Frédéric, 80220 Bouvaincourt-sur-Bresle (FR); Garest, Sébastien, 80220 Bouillancourt-en-Séry (FR)
(74) Mandataire: Hirsch & Associés

(56) Documents cités:
- JP-A- 2006 094 959
- NL-C2- 1 025 719
- US-A- 4 077 686
- US-A- 6 050 661

## Description

La présente invention concerne les armoires de type industriel, constituées par assemblage de panneaux.

De façon classique, une armoire de type industriel, destinée à contenir des éléments mécaniques d'un certain poids, est constituée d'un châssis de tubes métalliques délimitant les arêtes de l'armoire, habillé par un triptyque de plaques constituant la paroi arrière et les deux flancs de l'armoire et portant aussi un fond et un panneau de toit. Si les contraintes externes que doit pouvoir supporter l'armoire sont limitées, on peut alors omettre l'ossature et souder les tôles entre elles au niveau des arêtes.

Le coût d'un tel montage est relativement élevé car il représente un assez grand nombre de pièces toutes différentes, qu'il faut assembler.

La présente invention vise à proposer une autre structure d'armoire, permettant de diminuer l'acuité de ce problème.

A cet effet, l'invention concerne tout d'abord une feuille de matériau de construction présentant un pli limitant un premier panneau par rapport à un second panneau présentant, à l'opposé du pli, une bande de bord de couplage hermaphrodite munie d'une pluralité d'au moins une paire de reliefs de couplage complémentaires, respectivement mâle et femelle, situés en des positions globalement symétriques par rapport à un plan de symétrie sensiblement à mi-longueur de la bande de couplage, pour ainsi permettre un assemblage par couplage tête-bêche d'une paire de telles feuilles.

Ainsi, ayant deux telles feuilles, par exemple disposées initialement verticalement et globalement emboîtées, la première formant un flanc et une zone de fond d'armoire, il suffit de faire basculer latéralement la seconde d'un demi-tour, donc autour d'un axe horizontal à mi-hauteur traversant la bande de bord de couplage perpendiculairement au plan du second panneau, pour ainsi la disposer "la tête en bas", les bandes de bord respectives se trouvant accolées. On a donc une symétrie par rapport à un tel axe horizontal, de sorte que chacun des deux reliefs, mâle ou femelle, de la seconde feuille se trouve en position tête-bêche en regard du relief de type opposé, respectivement femelle ou mâle, de la première feuille. Le couplage ne présente ainsi pas de difficulté.

Les trois panneaux de triptyque ci-dessus sont donc remplacés par uniquement deux feuilles qui, en outre, sont de même type. Le coût global de fabrication et montage est donc réduit puisque ces feuilles sont hermaphrodites, donc peuvent s'assembler directement.

On notera que l'autre feuille peut toutefois être de dimensions différentes de la présente feuille en ce qui concerne son extension latérale, c'est-à-dire que les deux seconds panneaux respectifs ne sont pas nécessairement de même largeur et donc que les deux bandes de bord couplées ne se trouvent pas nécessairement dans le plan médian de l'armoire, parallèle au pli. Si les deux feuilles sont toutefois prévues de même largeur, elles peuvent donc sortir d'une même ligne de fabrication, donc en plus grande série, seul le pliage ultérieur les différenciant. Il peut toutefois, pour certaines applications particulières, d'armoires ou de casiers de formes très spécifiques, être prévu que la seconde feuille ne comporte pas de pli, ou encore que ce pli soit d'orientation spécifique, ou même qu'aucune des feuilles ne comporte de pli, s'il s'agit de disposer d'un panneau plan de grande taille, excédant les possibilités de fabrication d'un seul tenant.

On peut aussi songer à prévoir un troisième panneau, solidaire du premier ou du deuxième panneau, pour former le toit ou le fond, la forme globale initiale de la feuille à plat étant donc un L. Au moins l'un des trois bords libres du L peut d'ailleurs comporter des reliefs de couplage du genre de ceux indiqués ci-dessus et plus loin, pour, une fois rabattue à 90 degrés vers l'avant, se coupler à des reliefs correspondants du bord libre associé du premier ou second panneau concerné.

On remarquera que l'orientation finale de l'armoire n'entre pas en jeu dans la présente invention, et qu'en particulier la bande de bord de couplage, qui va occuper une position de colonne vertébrale, se trouvera à l'horizontale si l'on prévoit une position fonctionnelle couchée de l'armoire. Les deux feuilles constituent alors le dessous, l'arrière et le toit de l'armoire.

Selon une forme de réalisation intéressante, la paire de reliefs de couplage comporte respectivement une languette et une cavité de forme complémentaire, permettant ainsi la réception d'une telle languette de l'autre feuille.

Si le dit matériau est déformable élastiquement, la languette peut comporter avantageusement un croc latéral formant cliquet anti-retour.

La languette présente de préférence un profil de tranche latérale coudé, avec un pied de déport latéral, la reliant au reste de la bande de bord de couplage, et avec une patte de couplage s'étendant globalement dans un plan sensiblement parallèle à un plan d'extension globale de la bande de bord de couplage.

La languette forme ainsi, avec la bande de bord de couplage, un profil en baïonnette formant une mâchoire de bridage, de sorte qu'un tronçon de la bande de bord de couplage de l'autre feuille peut être glissé entre le dessous de la languette considérée et le reste de la bande de bord de couplage qui la porte, pour ainsi coupler la languette à ce tronçon de l'autre feuille, comportant la cavité. Cette mâchoire plaque l'autre bande de bord de couplage sur sa propre bande de bord de couplage, le cliquet éventuel ci-dessus assurant, ou renforçant, le maintien en position.

Selon une autre forme de réalisation intéressante, les reliefs sont une dentelure, constituée par au moins une dent et au moins une échancrure formant l'au moins une paire de reliefs, de bord libre de la bande de bord de couplage.

Contrairement à la variante, de la forme de réalisation ci-dessus, qui prévoit un assemblage latéral, côte à côte, des deux bandes de bord de couplage, au moyen de la languette en baïonnette formant mâchoire de bridage latéral, la présente forme de réalisation à dentelure implique une imbrication des deux bandes de bord de couplage, donc dans un plan commun de puzzle, de sorte que le raccord ainsi formé est peu visible en fond d'armoire.

L'assemblage peut être prévu de deux façons.

Si l'échancrure ou les échancrures sont à embouchure large, c'est-à-dire exemptes de tout goulot d'étranglement qui empêcherait une pénétration frontale de la dent correspondante jusqu'au fond de l'échancrure, les deux bandes de bord de couplage peuvent être mises dans un même plan, avec ensuite le mouvement voulu de rapprochement pour le couplage dans ce plan.

Dans le cas contraire, pour lequel la dent et l'échancrure présentent un profil latéral en queue d'aronde, les deux bandes de bord de couplage seront alors superposées dans une position relative telle que les dents se trouvent cadrées latéralement en regard des échancrures, et ensuite une pression latérale sur l'ensemble provoquera une sorte de sertissage amenant les deux bandes de bord dans un plan commun. On conçoit que l'accrochage ainsi réalisé est très solide.

Pour limiter le jeu latéral des deux pièces de puzzle, c'est-à-dire éviter, ou au moins limiter, toute sortie des deux pièces de puzzle hors de leur plan commun prévu, la dent et l'échancrure, sensiblement de même taille, c'est-à-dire même profil latéral, peuvent présenter chacune une surface de tranche s'étendant globalement en biseau selon l'épaisseur, de façon à permettre d'atteindre une position de couplage à imbrication mutuelle par le mouvement d'approche latérale évoqué plus haut, avec butée à la position de couplage.

Chaque surface de tranche s'étend ainsi globalement en biseau, selon un plan global d'extension oblique par rapport à une normale à un plan d'extension de la dent, respectivement de l'échancrure, pour ainsi présenter un gabarit d'encombrement, respectivement de passage, les dits gabarits diminuant, ensemble, de sensiblement une même valeur maximale à sensiblement une même valeur minimale, selon la position en épaisseur dans la bande de bord de couplage, pour permettre un emboîtement de la dent de la dite feuille avec l'échancrure de l'autre feuille de la dite paire, par placage mutuel des bandes de bord respectives et interpénétration amenant la dent de l'une et l'échancrure de l'autre dans un plan commun, la valeur d'encombrement maximale étant ainsi comprise entre les valeurs de passage minimale et maximale, pour ainsi inhiber toute possibilité de traversée complète de l'échancrure par la dent.

En d'autres termes, l'échancrure et la dent imbriquée dedans présentent, en coupe transversale d'extrémité, une forme de trapèze, rectangle ou non, formant une queue d'aronde selon l'épaisseur, de sorte que la dent, entrée latéralement d'un côté, ne peut ressortir de l'autre.

En particulier alors, il peut être prévu que la surface de tranche présente un profil comportant un épaulement, sensiblement à mi-épaisseur de la bande de bord de couplage.

La position finale relative, en épaisseur, des deux reliefs complémentaires est ainsi mieux définie que dans le cas d'un biseau selon une pente fixe, pour lequel les tolérances dans la position exacte de découpe des reliefs, et donc du biseau, se traduisent par une incertitude dans l'évolution du gabarit correspondant et donc une incertitude quant au jeu entre les biseaux des deux reliefs complémentaires.

Les reliefs de couplage comportent en outre avantageusement un téton et une lumière correspondante formant glissière de guidage, pour le centrage de l'autre feuille par couplage du tronçon et de la lumière avec respectivement une dite lumière et un dit téton de l'autre feuille, afin que les tétons soient guidés de façon à assurer une fonction de moyeu autour d'un point central, de pivotement relatif entre les deux bandes de bord de couplage. Il est ainsi défini, pour chaque ensemble constitué par un relief mâle de l'une quelconque des deux feuilles et le relief femelle correspondant de l'autre feuille, la position d'un arc de balayage les amenant en position de couplage.

Le téton comporte avantageusement un tronçon de cou portant une tête de forme agencée pour se coupler à une telle lumière par traversée, d'une face à l'autre, d'une extrémité d'entrée élargie d'une dite telle lumière et agencée pour rester prisonnière, du côté de la dite autre face d'une telle dite lumière lorsque le tronçon de cou glisse dans un tronçon constituant une telle dite glissière de guidage.

La glissière de guidage est donc constituée par la surface de tranche de la lumière, tandis que le dessous de la tête glisse sur au moins une piste dans la zone de surface en pourtour de la lumière, voire sur deux pistes parallèles situées de la part et d'autre de la lumière si la tête est quelque peu symétrique, en champignon, c'est-à-dire présente deux saillies latérales constituant des crocs de maintien de son couplage. Les deux bandes de bord de couplage restent ainsi mutuellement plaquées tout en pouvant glisser l'une sur l'autre selon la trajectoire voulue pour leur couplage final par les reliefs mâles et femelles.

Dans une forme de réalisation intéressante, l'au moins une dent et l'au moins une échancrure comportent deux tronçons respectifs limités par respectivement deux flancs, respectivement deux bords latéraux, présentant deux surfaces de biseau s'étendant selon des angles de signes opposés par rapport à un plan d'extension de la feuille.

On peut ainsi boutonner les deux feuilles en insérant le nez des dents de la seconde feuille, c'est-à-dire le tronçon le plus en avant, transversalement à mi-hauteur de l'échancrure, puis en rabattant la bande de bord de couplage de la seconde feuille dans le plan correspondant de la première feuille pour effectuer le couplage, de sorte que les biseaux de sens opposés empêchent toute translation relative des bandes de bord de couplage vers un côté ou l'autre de leur plan commun.

Selon une forme de réalisation particulière, la bande de bord de couplage est rabattue à environ 90 degrés par rapport au reste du second panneau.

On peut ainsi assembler deux telles feuilles en plaquant mutuellement les deux bandes de bord de couplage et en les faisant glisser l'une sur l'autre par un léger pivotement autour d'un point milieu situé dans le plan de symétrie de la bande de bord de couplage.

En variante, la bande de bord de couplage s'étend sensiblement dans un plan d'extension du second panneau.

L'invention concerne aussi une armoire comportant deux feuilles de matériau de construction selon l'invention, comportant un élément de maintien de la dite feuille et de l'autre feuille en position de couplage, l'élément de maintien étant par exemple agencé pour inhiber, au moins localement, tout glissement de découplage entre les feuilles et étant constitué par une pince pinçant ensemble localement les deux feuilles ou encore par une base et/ou une coiffe constituant un bandeau de l'armoire.

L'invention sera mieux comprise à l'aide de la description suivante de deux formes de réalisation d'une armoire réalisée à partir de deux feuilles de matériau de construction selon l'invention, en référence aux dessins annexés, sur lesquels :
la figure 1 est une vue en perspective avant et latérale de deux telles feuilles selon la première forme de réalisation, occupant sensiblement les positions relatives voulues pour être assemblées par des éléments de couplage intégrés à une bande de bord de couplage repliée respective,
la figure 2 est une vue de dessus des deux feuilles de la figure 1, montrant leur profil globalement en L et les éléments de couplage,
la figure 3 est une vue latérale, en coupe horizontale, d'une languette de couplage des figures 1 et 2,
la figure 4 est une vue latérale d'uniquement les deux bandes de bord de couplage des figures 1 et 2, qui sont plaquées l'une sur l'autre pour ensuite être couplées par un glissement en rotation,
la figure 5 est une vue latérale des éléments de couplage, alors en forme de dentelure, selon la seconde forme de réalisation,
la figure 6 est une section partielle d'une échancrure de couplage, selon la ligne de coupe VI-VI de la figure 5, couplée à une dent de l'autre bande de bord de couplage,
la figure 7 est une vue complète en coupe tout comme la figure 6, illustrant la position relative des deux bandes de bord de couplage de la figure 5 avant d'effectuer une rotation de couplage,
la figure 8 est une vue de dessus de deux bandes de bord de couplage de la figure 7 en position intermédiaire dans une trajectoire de couplage,
la figure 9 représente une échancrure selon une variante de la seconde forme de réalisation, avec des bords latéraux comportant chacun deux tronçons en biseau, selon l'épaisseur, et à angles de biseau de signes opposés,
la figure 10 représente une dent correspondant à l'échancrure ci-dessus, donc de même forme, mais mâle,
les figures 11 et 12 sont des sections transversales de la dent selon les flèches respectives XI-XI et XII-XII de la figure 10, et
la figure 13 représente une vue de dessus, par rapport à la figure 10, de la dent, c'est-à-dire une vue latérale longitudinale de son épaisseur.

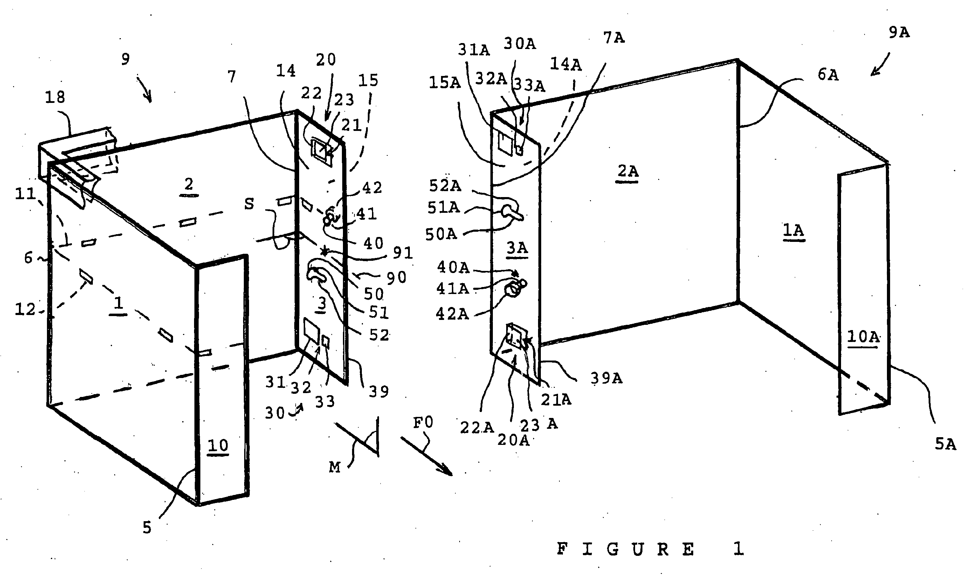

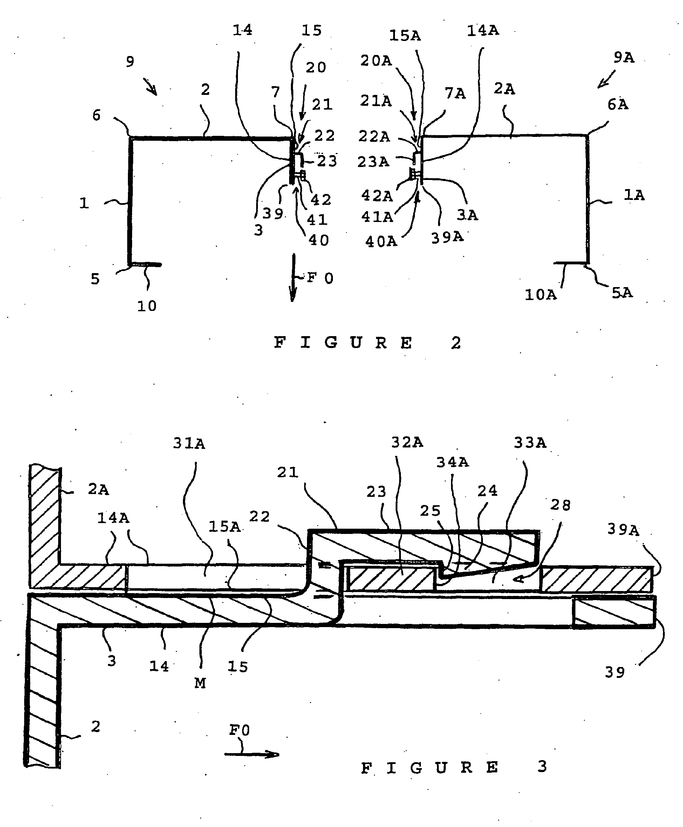

La figure 1 représente, en perspective avant et latérale gauche, une première feuille 9, ici en tôle, prévue pour être couplée à une seconde feuille 9A de même forme, comme illustré par la figure 2.

Dans un but de concision, l'exposé de la constitution des éléments porte essentiellement sur la première feuille 9 et au besoin sur la seconde feuille 9A. Chaque élément de la seconde feuille 9A porte la même référence que l'élément identique de la première feuille 9, avec en plus le suffixe A, de sorte que l'explication apportée pour l'un d'eux d'une telle paire de jumeaux est à transposer pour l'autre. De même, les première et seconde feuilles 9 et 9A sont supposées être orientées selon leur position finale de montage de l'armoire, c'est-à-dire s'étendant dans des plans verticaux. Bien évidemment, les explications ci-dessous resteraient valables, avec la transposition voulue, si les première et seconde feuilles 9 et 9A étaient orientées autrement.

La première feuille 9, rectangulaire et initialement plane, forme deux panneaux principaux perpendiculaires, à savoir un premier panneau 1, destiné à constituer un flanc gauche de l'armoire, qui se poursuit, à travers un pli latéral arrière vertical 6 à 90 degrés parallèle à l'un des côtés du rectangle évoqué ci-dessus, par un second panneau 2 destiné à constituer une zone de paroi arrière de l'armoire. Dans cet exemple, le premier panneau 1 est limité, à l'opposé du pli latéral arrière vertical 6, par un pli latéral avant vertical 5 qui le sépare d'un volet avant 10 relativement étroit, dont un bord libre vertical délimite une ouverture de porte. Le second panneau 2 comporte, à l'opposé du pli latéral arrière 6, une bande de bord de couplage 3 à extension verticale comportant des éléments de couplage hermaphrodite avec une même bande de bord de couplage 3A de la seconde feuille 9A, reliée, par un pli arrière 7A, à un second panneau 2A lui-même relié, par un pli latéral arrière 6A, à un premier panneau 1A, séparé d'un panneau avant 10A par un pli avant 5A.

Dans cette première forme de réalisation, la bande de bord de couplage 3 est un volet rabattu à 90 degrés vers l'avant, c'est-à-dire parallèlement au premier panneau 1, autour d'un pli arrière vertical 7, opposé à un bord libre vertical 39. La bande de bord de couplage 3 présente une face latérale interne 14 opposée à une face latérale externe 15, de couplage, dans un plan vertical médian M de l'armoire, par appui sur une face latérale externe homologue 15A de la bande de bord de couplage 3A, elle-même opposée à une face latérale interne 14A. La flèche F0 sert à repérer la direction horizontale vers l'avant dans les diverses figures.

Il est représenté en pointillés la position prévue pour une étagère 11 comportant des pattes latérales de support, non dessinées, à insérer dans des lumières 12 de la feuille 9. La feuille 9A comporte les mêmes lumières, non dessinées dans un but de clarté. De façon duale, les lumières 12 peuvent être remplacées par des pattes de support rabattues à l'horizontale.

L'étagère 11 est ici prévue pour s'étendre sur toute la largeur de l'armoire, c'est-à-dire qu'elle comporte une encoche arrière logeant les bandes de bord de couplage 3 et 3A, qui peuvent aussi être munies de lumières 12. Une coiffe 18, dont seule une partie d'angle est représentée, est prévue pour enserrer les tranches sommitales des feuilles 9 et 9A.

La bande de bord de couplage 3 hermaphrodite est munie d'une pluralité d'au moins une paire de reliefs de couplage complémentaires, respectivement mâle(s) 20 et femelle(s) 30, situés en des positions globalement symétriques par rapport à un plan horizontal de symétrie S situé sensiblement à mi-longueur de la bande de couplage 3, pour ainsi permettre de construire un châssis ou habillage d'armoire par couplage tête-bêche d'une paire de telles feuilles 9 et 9A, de part et d'autre du plan vertical médian M de l'armoire. Les reliefs mâles 20, constitués par des éléments 21-25, 40-42, et les reliefs femelles 30, constitués par des éléments 31-33, 50-52, sont expliqués en relation avec les figures suivantes.

Les reliefs mâles 20, bien visibles sur les figures 2 et 3, sont ici essentiellement constitués par une languette 21 déformable élastiquement et présentant un profil de tranche latérale coudé, avec un pied 22 de déport latéral d'une patte de couplage 23 de l'autre côté du plan médian M.

Les reliefs femelles 30 comportent ici une découpe de passage 31, de même taille que la languette 21, pour permettre le passage de la languette 21A de la seconde feuille 9A, appartenant aux reliefs mâles 20A. La languette 21 est ici située dans un tronçon d'extrémité supérieure de la bande de bord de couplage 3 et la découpe 31 est située à l'opposé, dans un tronçon d'extrémité inférieure. La languette 21 et la découpe 31 sont ainsi situées en deux positions respectives présentant une symétrie spéculaire par rapport au plan horizontal de symétrie S. Le plan de symétrie S coupe ainsi la bande de bord de couplage 3 selon une ligne horizontale à mi-hauteur 90 qui contient un point de rotation 91 pour le couplage des deux bandes de bord de couplage 3 et 3A, comme expliqué plus loin.

La patte de couplage 23 s'étend globalement dans un plan vertical parallèle au plan médian M, et donc aussi à un plan d'extension globale de la bande de bord de couplage 3, et s'étend fonctionnellement en direction horizontale, ici vers l'avant. La longueur de déport latéral du pied 22 correspond à une valeur d'épaisseur de la bande de bord de couplage 3A (et donc aussi de la bande de bord de couplage 3), de sorte que la patte de couplage 23 constitue une mâchoire de bridage qui traverse une découpe de passage 31A limitée en avant par un tronçon de verrouillage 32A de la bande de bord de couplage 3A. La patte de couplage 23 délimite, avec la surface latérale externe 15, un logement 28 (fig. 3) d'épaisseur ajustée pour recevoir le tronçon de verrouillage 32A. Précisément, la zone comportant le tronçon de verrouillage 32A, rigide, va être pincée entre la patte de couplage 23 et une zone de pourtour avant, sur la surface latérale externe 15, d'une zone découpée dont la matière a servi à former la languette 21.

On notera que les appellations "mâle" et "femelle" ont essentiellement ici un simple but de clarté pour différencier les deux éléments de couplage, mais que, par exemple, l'élément dit mâle 22, 23 pourrait tout aussi bien être dit femelle puisqu'il définit le logement 28 dans lequel pénètre le tronçon de verrouillage 32A, qui pourrait donc être considéré comme mâle.

Avec les éléments de couplage 20, 30 tels que décrits jusqu'ici, le maintien en position finale de couplage pourrait être assuré par un simple appui élastique de la patte 23 sur le tronçon de verrouillage 32A, la patte 23 devant alors être conformée de façon légèrement rabattue pour occuper au repos une position telle que le logement 28 présente un étranglement en épaisseur, avec de préférence un biseau d'entrée en extrémité de la patte 23 ou du tronçon de bande de bord de couplage 3A, pour que ce dernier arme le ressort de bridage que constitue la patte 23.

Toutefois ici, la figure 3 montre que, pour mieux assurer le maintien du couplage, la patte 23 porte un élément mâle formant un cliquet anti-retour 24 destiné à pénétrer dans une lumière de verrouillage 33A (voir aussi fig. 1) ménagée à l'avant du tronçon de verrouillage 32A. Le cliquet 24 forme un croc latéral à l'intérieur du logement 28, avec une rampe avant que le tronçon de verrouillage 32A va repousser latéralement pour ouvrir le logement 28 à l'épaisseur voulue, et avec une surface postérieure de butée anti-retour 25, qui, une fois le cliquet 24 détendu de par son cadrage complet avec la lumière de verrouillage 33A, viendra en regard d'une surface antérieure 34A de la lumière de verrouillage 33A.

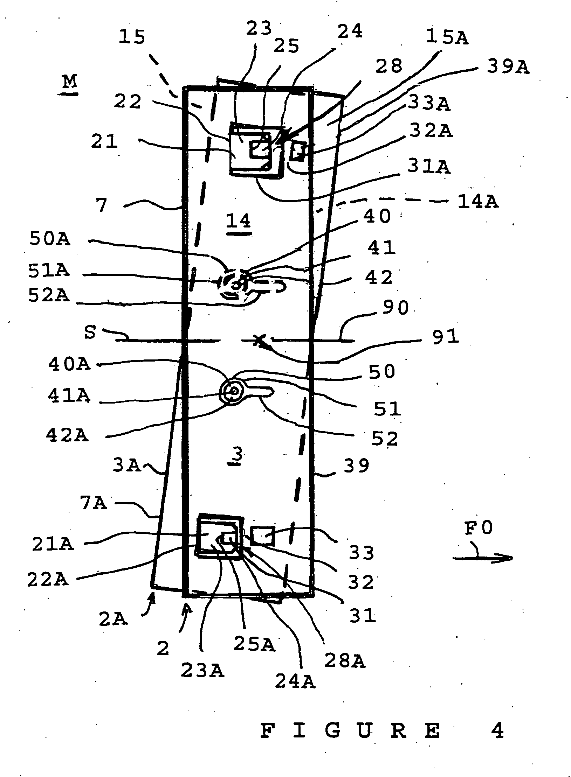

La figure 4 représente, en vue latérale, la bande de bord de couplage 3 et, derrière, la bande de bord de couplage 3A. Du fait que le basculement de la seconde feuille 9A est latéral, les pattes 23 et 23A sont toutes deux orientées de la même façon, horizontalement vers l'avant, et les lumières de verrouillage 33 et 33A occupent la position voulue en avant de celles-ci. On notera que la position précise de la découpe 31A, c'est-à-dire sa distance au bord libre 39A de la bande de bord de couplage 3A, correspond donc à un cadrage avec la patte 23 en position initiale, d'amorce de mouvement de couplage avec verrouillage, ce cadrage disparaissant donc en position finale de couplage effectif, puisque la rotation de couplage a pour but d'établir un verrouillage par suppression du cadrage. Si l'on suppose que la bande de bord de couplage 3 reste fixe et verticale, l'opérateur fait initialement légèrement basculer le sommet de la seconde feuille 9A dans le plan médian M autour du point de rotation 91 vers l'avant de l'armoire, et donc avec elle la bande de bord de couplage 3A telle que représentée sur la figure 4, dont la direction d'extension, initialement verticale selon la figure 1, a légèrement basculé dans le sens des aiguilles d'une montre. Les découpes de passage 31 et 31A permettent, dans cette position initiale, le passage en déport latéral des pattes 23A et 23 pour amorcer le couplage, de sorte que les surfaces latérales externes 15 et 15A viennent en appui mutuel dans le plan médian M.

Par une légère rotation, en sens inverse des aiguilles d'une montre, de la bande de bord de couplage 3A, le couplage en extrémité supérieure s'effectue par le fait que l'élément femelle de la seconde feuille 9A (lumière de verrouillage 33A) vient se coupler à l'élément mâle de la première feuille 9 (cliquet 24) dans le logement 28, tandis que, au niveau de l'extrémité inférieure, c'est l'élément mâle (patte 23A) de la seconde feuille 9A qui vient se coupler à la lumière de verrouillage 33 de la première feuille 9, une surface postérieure de butée anti-retour 25A d'un cliquet 24A assurant le verrouillage.

Dans cet exemple, il est prévu que les reliefs mâles 20 et femelles 30 comportent en outre respectivement un téton 40 et une lumière correspondante 50, de centrage de la seconde feuille 9A par couplage avec respectivement une même lumière 50A et un même téton 40A, afin que les tétons 40, 40A soient guidés de façon à assurer une fonction de moyeu autour du point de rotation central 91, de pivotement relatif entre les deux bandes de bord de couplage 3, 3A. Pour chaque ensemble constitué par la patte 23, 23A de l'une quelconque des deux feuilles 9, 9A et la découpe de passage correspondante 33A, 33 de l'autre feuille 9A, 9, il est ainsi défini la position d'un arc de balayage autour du point de rotation central 91, les amenant en position de couplage, comme expliqué en relation avec la figure 4.

Le téton respectif 40, 40A présente ici (fig. 2) un profil en champignon, avec un tronçon de cou 41, 41A portant une tête 42, 42A agencée pour se coupler (fig. 4) à la lumière 50A, 50 de l'autre feuille 9A, 9 par traversée, depuis la surface latérale externe 15A, 15 jusqu'à la face latérale interne 14A, 14, d'une extrémité d'entrée élargie 51A, 51 de la lumière de guidage 50A, 50. La tête 42, 42A est dimensionnée en largeur pour rester prisonnière, du côté de la face latérale interne 14A, 14 de la lumière opposée 50A, 50, lorsque le tronçon de cou 41, 41A glisse dans un tronçon de guidage 52A, 52 constituant une glissière de guidage pour le verrouillage par légère rotation selon la figure 4.

Les deux tétons 40, 40A définissent ainsi, à mi-distance mutuelle, la position en hauteur du point de rotation central 91, par rapport auquel ils se trouvent donc sensiblement diamétralement opposés. Compte tenu de la faible rotation de verrouillage, les tronçons de guidage 52, 52A peuvent être quasiment rectilignes.

On notera que le téton 40 n'est pas nécessairement dans l'alignement de la languette 21 avec l'échancrure de passage 31, comme d'ailleurs le suggère la figure 4. De plus, comme les positions des deux tétons 40, 40A définissent sensiblement un diamètre, il peut tout ainsi bien être prévu une disposition tournée angulairement, par exemple d'un quart de tour, par rapport à celle dessinée, avec donc le téton 40 (40A) et la lumière de guidage 50 (50A) tous deux globalement dans le plan horizontal de symétrie S.

Outre le maintien à hauteur relative voulue entre les deux bandes de bord de couplage 3, 3A, un tel montage assure en outre un complément de couplage pour maintenir mutuellement plaquées les surfaces latérales externes 15 et 15A.

On conçoit que les divers reliefs 21, 31, 40, 50 exposés ci-dessus, ou d'autres ayant la même fonction, peuvent être prévus en plus grand nombre si, par exemple, l'armoire est de grande taille.

En variante des figures 1 à 4, il peut être prévu que les bandes de bord de couplage 3 et 3A ne soient pas rabattues, et s'étendent donc dans le plan du second panneau 2, 2A. En pareil cas, la symétrie par rapport au plan médian M disparaît, la bande de bord de couplage 3A étant maintenant initialement plaquée derrière, ou devant, la bande de bord de couplage 3. La surface "latérale" externe 15, maintenant tournée vers l'arrière, ne reçoit donc plus la surface "latérale" externe 15A portant le relief mâle 22A, 23A, maintenant en saillie vers l'arrière, mais reçoit la face "latérale" interne 14A. Il faut donc retourner le pied 22A vers l'avant, pour que la patte 23A passe devant la face latérale interne 14, tournée vers l'avant. A cet effet, et pour conserver une même chaîne de fabrication, il peut être prévu de supprimer le pied 22, 22A, et de prévoir que la patte 23 soit suffisamment longue pour que l'opérateur la torde dans un sens (patte 23) ou dans l'autre (patte 23A) selon le besoin.

Ou bien encore, il peut être prévu que la patte 23 présente une extrémité libre vrillée pour faire saillie, par un premier coin d'extrémité libre, hors de la face "latérale" interne 14 et, par un second coin d'extrémité libre, hors de la surface "latérale" externe 15. En pareil cas, le tronçon de verrouillage 32A n'est alors pas à bord libre rectiligne, c'est-à-dire vertical, mais est dentelé par un relief servant de rostre pour s'engager le premier sous le coin d'extrémité libre de la patte 23 qui est relevé, afin de soulever suffisamment celle-ci pour que le reste du tronçon de bande de bord de couplage 3A, avec la lumière de verrouillage 33A, puisse accéder à l'intérieur du logement 28. Il peut encore être prévu de dédoubler la patte 23 en la fendant longitudinalement, chacune des deux parties jumelles de la patte 23 débordant, respectivement, de la face latérale interne 14 et de la face latérale externe 15, pour un couplage comme exposé au début.

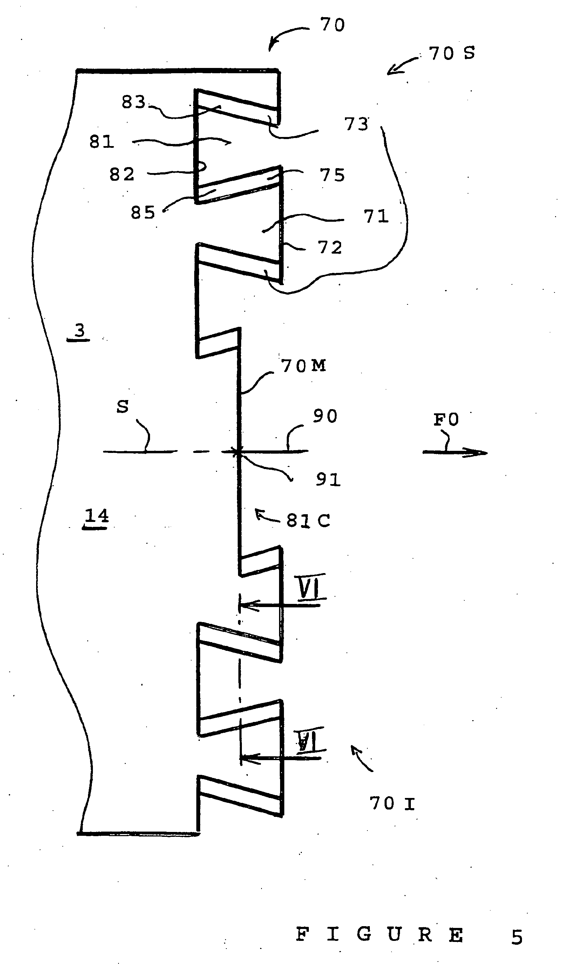

Les figures 5 à 7 illustrent la seconde forme de réalisation d'une feuille selon l'invention, qui ne diffère de la première forme de réalisation que par la forme de réalisation de la bande de bord de couplage 3, 3A. La structure générale reprend celle de la figure 1, avec aussi la possibilité de la variante selon laquelle la bande de bord de couplage 3 est coplanaire avec le second panneau 2. Dans un but de concision, il ne va donc être exposé que les différences par rapport à la première forme de réalisation.

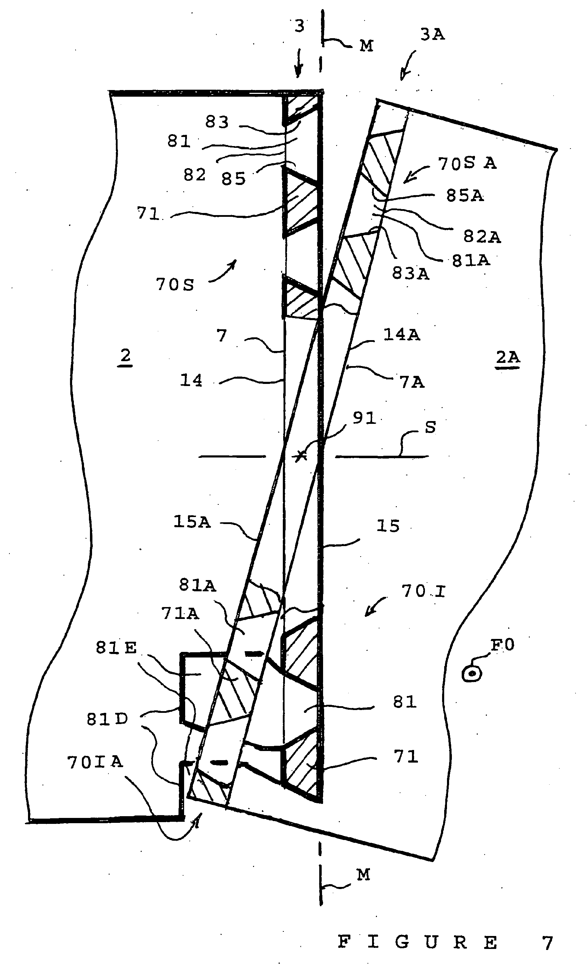

Les reliefs de couplage sont ici constitués par une demi-dentelure supérieure 70S et une demi-dentelure inférieure 70I formant ensemble une dentelure 70 à dents 71, présentant un bord sommital 72 et deux flancs 73, 75, alternant avec des échancrures 81 à fond 82 et à bords latéraux 83, 85. Du fait de l'alternance des dents 71 et des échancrures 81, les deux références 73, 83 (et aussi 75, 85) désignent en fait une même surface de flanc. Cette duplication a un but de clarté, car elle permet d'utiliser par la suite l'une ou l'autre de ces références selon que l'on évoque respectivement une dent 71 ou une échancrure 81. Dans cet exemple, les flancs 73, 75, ou bords latéraux 83, 85, sont orientés en biseau, et, précisément, quelque peu tournés vers la face latérale interne 14, donc sont visibles sur la figure 5. On verra toutefois par la suite que cette orientation peut être retournée, vers la face externe 15, pour la totalité de la dentelure 70 ou pour l'une des moitiés (moitié supérieure 70S sur la figure 7, où l'embouchure des échancrures supérieures 81 est du côté de la surface latérale externe 15).

La figure 5 montre que chaque dent 71 et l'échancrure 81 en position symétrique par rapport au point de rotation central 91 constituent une paire d'éléments de même profil latéral, ce profil pouvant toutefois changer d'une paire à l'autre. Les éléments mâle, dent 71, et femelle, échancrure 81, d'une même paire sont ainsi de même forme pour pouvoir imbriquer mutuellement les bandes de bord de couplage 3 et 3A à la façon d'un puzzle, c'est-à-dire dans un plan commun, les bords sommitaux 72A des dents 71A de la bande de bord de couplage 3A venant ainsi en regard des fonds 82 des échancrures 81. Dans cet exemple, il s'agit d'un assemblage de type à mortaise, les échancrures 81 présentant ainsi un profil latéral en queue d'aronde, avec donc un goulot d'étranglement à l'opposé du fond 82, les dents 71 présentant un même profil latéral, le bord sommital 72 présentant une extension plus grande que le goulot d'étranglement.

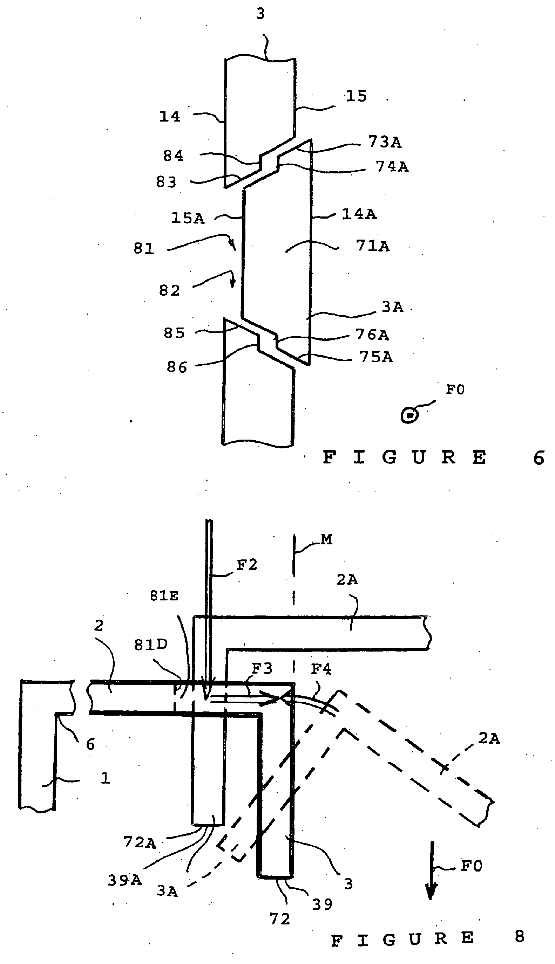

S'il n'est pas prévu de telles queues d'arondes en vue latérale, les dentelures 70, 70A et échancrures 80, 80A des deux feuilles 9 et 9A peuvent au choix être couplées en mettant bord à bord, dans le plan de la figure 5, les tranches des bandes de bord de couplage 3 et 3A et en les rapprochant pour les imbriquer, ou bien en les superposant selon le cadrage voulu puis en les pressant l'une contre l'autre, perpendiculairement au plan de la figure 5. Cette dernière solution est ici la seule possible, c'est-à-dire que la pénétration d'une dent 71 dans une échancrure 81A s'effectue latéralement, dans le sens de l'épaisseur. Comme l'évoque la figure 5 et comme le montre mieux la section verticale transversale de la bande de bord de couplage 3 selon la figure 6, au moins un bord latéral, ici les deux bords latéraux 83 et 85 de l'échancrure 81 présentent une direction d'extension inclinée par rapport à une normale aux faces latérales interne 14 et externe 15, c'est-à-dire que l'échancrure 81 présente un gabarit de passage qui se rétrécit en allant de la face latérale externe 15, où se trouve l'embouchure de réception de la dent 71A, vers la face latérale interne 14.

En outre, dans cet exemple, à titre d'illustration d'une variante, chaque bord latéral 83, 85 présente, à mi-épaisseur, un rétrécissement abrupt du gabarit de passage, sous forme d'un épaulement respectif 84, 86 qui est donc tourné vers la face latérale externe 15. On aura compris que, en pareil cas, le reste du bord latéral 83, 85 pourrait être, contrairement au dessin, perpendiculaire à la face latérale externe 15, puisque l'épaulement 84, 86 garantit le rétrécissement global voulu. Comme, d'une part, la dent 71A, à flancs 73A et 75A comportant des épaulements respectifs 74A et 76A, et, d'autre part, l'échancrure 81 présentent deux mêmes profils latéraux, c'est-à-dire de même forme et même taille, qui varient de la même façon selon la position en épaisseur, on conçoit que la dent 71A, avec de tels épaulements 74A et 76A, vient s'encastrer exactement dans le volume délimité par l'échancrure 81, le rétrécissement l'empêchant de ressortir au niveau de la face latérale interne 14. Il s'agit donc d'un positionnement tridimensionnel.

Il peut être prévu que le sens de l'étranglement du gabarit de passage soit inversé entre la demi-dentelure supérieure 70S, située au-dessus du plan horizontal de symétrie S, et la demi-dentelure inférieure 70I.

Pour une telle situation, il va être exposé un premier cas, qui concerne la variante ci-dessus exempte de pli arrière 7, c'est-à-dire pour laquelle les bandes de bord de couplage 3 et 3A sont coplanaires avec le second panneau 2, respectivement 2A. Un second cas sera ensuite exposé, concernant la forme "de base", c'est-à-dire avec le pli arrière 7.

Dans le premier cas ci-dessus, les deux bandes de bord de couplage 3, 3A sont d'abord mises en contact, selon la figure 7, par leur tranche dans la zone à mi-hauteur comportant le plan de symétrie S. A cet effet, il aura été prévu que les demi-dentelures 70S et 70I soient mutuellement disjointes, en étant séparées par un tronçon rectiligne vertical 70M (figure 5), donc exempt de dents dans cette zone centrale, c'est-à-dire représentant le fond d'une échancrure centrale 81C, relativement large en extension verticale, de profondeur égale à la moitié de la hauteur/profondeur des dents 71 / échancrures 81. L'ondulation de la dentelure 70, de part et d'autre d'une ligne verticale moyenne (tronçon 70M), est donc alors nulle.

Les fonds respectifs des deux larges échancrures centrales, 70M et son homologue, à demi-profondeur des feuilles 9 et 9A, présentées dans des plans mutuellement légèrement inclinés, étant ainsi mis en contact ponctuel au niveau du plan horizontal de symétrie S, on peut alors coupler les bandes de bord de couplage 3 et 3A à la façon de deux peignes présentés, dans des plans mutuellement inclinés, pour que les extrémités des dents de chaque peigne s'avancent jusqu'à un plan transversal de base des dents de l'autre peigne.

Pour permettre la rotation finale de couplage, les deux demi-dentelures 70S, 70I de la bande de bord de couplage 3 (et de même 3A) doivent donc présenter une symétrie ponctuelle par rapport au point de rotation 91, situé sur le tronçon 70M ou, en d'autres termes, présenter une symétrie spéculaire par rapport au plan horizontal de symétrie S, avec toutefois un décalage vertical relatif d'un demi-pas de dentelure pour qu'ainsi une dent 71, devenant une dent 71A pour la seconde feuille 9A, se retrouve en regard d'une échancrure 81.

Ensuite, cette rotation finale de couplage s'effectue selon le principe de rotation de la figure 4, les dents 71A étant l'équivalent des pattes 23A et pénétrant dans l'échancrure 81 correspondante, par une rotation, autour de la ligne horizontale à mi-hauteur 90 (figure 5) dans le sens inverse des aiguilles d'une montre dans le cas du dessin de la figure 6. Par ce même mouvement, les bords latéraux 83A, 85A viennent s'appliquer sur les flancs 83, 85 en regard.

Pour les dents 71A de la moitié supérieure (figure 6), la pénétration s'effectue d'abord par leur zone de surface latérale externe 15A qui est en avant, par rapport au sens du mouvement parallèlement au plan du panneau 2, alors que, pour les dents 71A de la moitié inférieure, ce sera leur zone de face latérale interne 14A qui sera en avant. De la sorte, même si l'une des deux bandes de bord de couplage 3, 3A tend par la suite à se gondoler, il ne peut y avoir de découplage important puisque les bandes de bord de couplage 3 et 3A sont bloquées en décalage en épaisseur dans les deux sens par les extrémités respectives en regard des demi-dentelures 70S et 70I, proches l'une de l'autre de part et d'autre du plan horizontal de symétrie S.

Pour mieux empêcher le découplage par sortie latérale des dents 71, 71A hors du plan commun, il peut en outre être prévu un élément complémentaire de blocage en rotation en haut et/ou en bas, par exemple une pince locale de l'extrémité correspondante des bandes de bord de couplage 3 et 3A ou, globalement, la coiffe 18 enserrant l'ensemble de l'extrémité supérieure des feuilles 9 et 9A et une base de même type, ou des rivets. La coiffe 8 est ici en forme de U retourné, pour constituer une pince sur tout le pourtour supérieur de l'armoire, inhibant ainsi tout mouvement de découplage entre les bandes de bord de couplage 3 et 3A.

Dans le second cas ci-dessus, le pli arrière 7 étant prévu (fig. 7), les échancrures 81 de la demi-dentelure inférieure 701 sont approfondies, c'est-à-dire débordent légèrement, au-delà du pli arrière 7, dans le second panneau 2, par une extension d'échancrure 81E limitée par un fond déporté 81D remplaçant le fond 82. Le second panneau 2 forme ainsi, avec la bande de bord de couplage 3, une sorte de main en râteau, dont une phalange de base est dans le plan de la paume (coupe du panneau 2 à extension horizontale sur la figure 8) et dont les autres phalanges sont repliées vers l'avant au niveau du pli arrière 7. Le bord sommital 72A des dents 71A du même râteau constitué par la bande de bord de couplage 3A, de même forme, peut ainsi être présenté à l'arrière des premières phalanges ci-dessus, c'est-à-dire au niveau du fond déporté 81D des échancrures 81 approfondies, pour ensuite avancer le second panneau 2A jusqu'au plan du second panneau 2 selon la flèche F2. Deux possibilités peuvent être prévues dans cette phase.

Selon une première possibilité, la bande de bord de couplage 3A est verticale et donc parallèle à la bande de bord de couplage 3 et en regard de la face latérale interne 14, de sorte que le mouvement final de couplage sera une translation latérale, selon la flèche F3, écartant la bande de bord de couplage 3A par rapport au pli latéral arrière 6, afin de ramener la bande de bord de couplage 3A dans le plan médian M, défini par la bande de bord de couplage 3. Les dents 71A et échancrures 81A viennent ainsi s'imbriquer avec respectivement les échancrures 81 et les dents 71, en face desquelles elles ont été préalablement cadrées par le mouvement d'avance ci-dessus.

Selon une seconde possibilité, la bande de bord de couplage 3A est initialement présentée selon une orientation légèrement inclinée sur la verticale, selon la figure 7, avec croisement avec la bande de bord de couplage 3 au niveau de la ligne horizontale à mi-hauteur 90, selon le principe exposé pour la figure 4. C'est donc uniquement la demi-dentelure inférieure 70IA qui pénètre dans les extensions d'échancrure 81E, alors que la demi-dentelure supérieure 70SA est au-delà du plan médian M, c'est-à-dire du côté de la face latérale externe 15. La rotation, dans son plan, du second panneau 2A avec la bande de bord de couplage 3A ramène celle-ci dans le plan médian M, avec ainsi couplage avec la bande de bord de couplage 3. Les profils, en tranche transversale, des dents 71, 71A et des échancrures 81, et 81A à fond 82A, sont donc alors en forme de trapèze. Précisément, les échancrures 81 de la demi-dentelure inférieure 70I ont un gabarit de passage qui diminue depuis la face latérale interne 14, d'embouchure, qui "voit" arriver les dents 71A de la demi-dentelure inférieure 70IA, vers la face latérale externe 15, alors que les échancrures 81 de la demi-dentelure supérieure 70S ont un gabarit de passage qui diminue de la face latérale externe 15, qui "voit" arriver les dents 71A de la demi-dentelure supérieure 70SA, vers la face latérale interne 14.

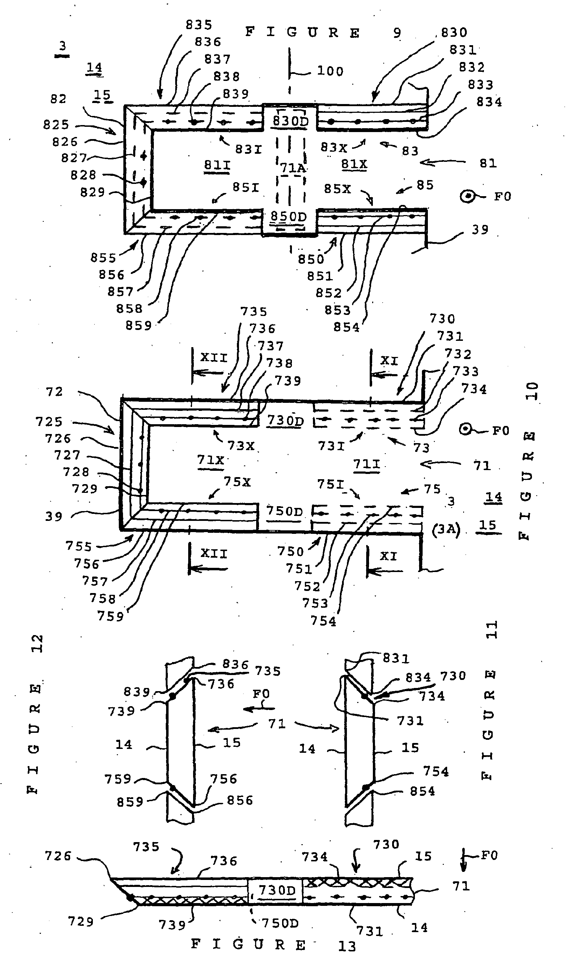

Les figures 9 à 13 représentent une variante des dents 71 et échancrures 81 en biseau. La différence essentielle par rapport à la forme de réalisation selon la figure 7, où il y a inversion du sens du biseau entre la demi-dentelure supérieure 70S et la demi-dentelure inférieure 70I, réside dans le fait que toutes les dents 71 ont au moins un flanc comportant deux tronçons à biseaux respectifs présentant des angles de signes opposés (figures 11-12). Les dents sont donc toutes de même type, de ce point de vue. Cette forme de réalisation permet un boutonnage des bandes de bord de couplage 3 et 3A dans finalement un même plan. Le pli arrière 7 est donc inutile.

La figure 9 représente une zone de la face "latérale" interne 14, qui est en fait tournée vers l'avant. La bande de bord de couplage 3 comporte une échancrure 81 qui est fonctionnellement divisée en deux tronçons à biseaux à angles de signes opposés. En effet, côté embouchure proche du bord libre 39, l'échancrure 81 comprend un tronçon externe 81X, ou d'embouchure, dont les bords latéraux 83, 85 présentent un biseau 830, respectivement 850, tourné quelque peu vers la face latérale interne 14, alors que, du côté du fond 82 de l'échancrure 81, les bords latéraux 83, 85 et le fond 82 présentent un tronçon interne 831, ou de fond, comportant un biseau 835, respectivement 855, quelque peu tourné vers la face latérale externe 15, ici cachée. D'une façon générale, et comme déjà évoqué, il suffit, en principe, d'au moins une surface en biseau dans chaque sens, c'est-à-dire que le biseau du fond 82 et de l'un des bords latéraux 83, 85 constitue un élément redondant.

Le tronçon externe, 83X, du bord latéral 83 présente ainsi la surface de biseau 830 coupant les faces latérales interne 14 et externe 15 selon deux lignes respectives 831 et 834, voir aussi figure 11. La ligne 831 représente ainsi une embouchure latérale présentant un maximum du gabarit de passage transversal, perpendiculairement au plan de la figure 9, c'est-à-dire en épaisseur, offert à la dent 71 depuis la face latérale interne 14 vers la face latérale externe 15, et la ligne 834 correspond à un minimum de ce gabarit de passage au niveau de la face latérale externe 15.

Pour faciliter la compréhension du dessin, il a été dessiné deux lignes 832, 833 à des niveaux intermédiaires de pente de biseau, qui pourraient aussi représenter deux ruptures de pente éventuelles délimitant un épaulement 84 illustré sur la figure 6. Les points sur la ligne 833, la plus proche du minimum du gabarit de passage (ligne 834), ne sont que symboliques, à titre de différenciation.

Le tronçon externe en regard, 85X, appartenant au bord latéral 85 présente de même le biseau 850 tourné quelque peu vers la face latérale interne 14, avec des lignes 851, 852, 853, 854 homologues des lignes 831, 832, 833, 834.

Les tronçons internes 83I et 85I des bords latéraux 83 et 85, de même ici que le fond 82, présentent un biseau qui, quant à lui, est quelque peu tourné vers la face latérale externe 15, donc caché sur la figure 9.

Le tronçon interne 83I du bord latéral 83 présente ainsi la surface de biseau 835 coupant les faces latérales interne 14 et externe 15 selon deux lignes respectives 839 et 836, voir aussi figure 12. La ligne 836 représente ainsi une embouchure latérale présentant un maximum du gabarit de passage transversal, c'est-à-dire en épaisseur, offert à la dent 71 depuis la face latérale externe 15 vers la face latérale interne 14, et la ligne 839 correspond à un minimum de ce gabarit de passage au niveau de la face latérale interne 14. Il a de même été dessiné deux lignes intermédiaires 837 et 838 depuis la ligne 836 vers la ligne 839.

Le tronçon interne en regard, 85I, appartenant au bord latéral 85 présente de même le biseau 855 tourné quelque peu vers la face latérale externe 15, avec des lignes 856, 857, 858, 859 homologues des lignes 836, 837, 838, 839. Il en est de même pour le fond 82, avec une surface de biseau 825 et des lignes respectives 826, 827, 828, 829.

Les deux tronçons 831, 83X, respectivement 851, 85X, de chaque bord latéral 83, 85 sont séparés par une découpe 830D, respectivement 850D, dont la distance entre les deux fonds correspond à la largeur de la dent 71, c'est-à-dire la dimension verticale de celle-ci sur la figure 10. Le rectangle en ligne en pointillés référencé 71A représente ainsi la position de présentation de la dent 71A pour amorcer le couplage. Pour éviter une répétition de suffixes A sur la figure 10, on a représenté une dent 71 après retournement dans le plan des figures 9 et 10, c'est-à-dire qu'elle occupe la position d'une dent 71A de la feuille 9A.

La dent 71, telle que retournée sur la figure 10, représente, sous forme mâle, l'espace de logement délimité par les divers biseaux de l'échancrure 81.

La figure 10 représente une autre zone de la face "latérale" interne 14. La bande de bord de couplage 3 comporte la dent 71 qui est fonctionnellement divisée en deux tronçons, interne et externe, à biseaux à angles de signes opposés. En effet, côté de sa base, à distance du bord libre 39, la dent 71 comprend un tronçon interne 71I, dont les flancs 73, 75 présentent un biseau respectif 730, 750 tourné quelque peu vers la face latérale externe 15, voir figure 11, alors que, du côté du sommet 72, les flancs 73, 75 et le sommet 72 présentent un tronçon externe 71X comportant un biseau 735, 755, 725 quelque peu tourné vers la face latérale interne 14, voir aussi figure 12.

Le tronçon interne, 73I, du flanc 73 présente ainsi la surface de biseau 730 coupant les faces latérales interne 14 et externe 15 selon deux lignes respectives 731 et 734. La ligne 734 correspond ainsi, vers le haut, à un minimum du gabarit d'occupation transversal, c'est-à-dire en épaisseur, de la dent 71, au niveau de la face latérale externe 15, et la ligne 734 correspond à un maximum de ce gabarit d'occupation au niveau de la face latérale interne 14.

Pour faciliter la compréhension du dessin, il a été dessiné deux lignes 732, 733 à des niveaux intermédiaires de pente de biseau, qui pourraient aussi représenter deux ruptures de pente éventuelles délimitant un épaulement 74 illustré sur la figure 6. Les points sur la ligne 733, la plus proche du minimum du gabarit d'occupation (ligne 734), ne sont que symboliques, à titre de différenciation.

Le tronçon interne en regard, 75I, appartenant au flanc 75 présente de même le biseau 750 tourné quelque peu vers la face latérale externe 15, avec des lignes 751, 752, 753, 754 homologues des lignes 731, 732, 733, 734.

Les tronçons externes, 73X et 75X, des flancs 73 et 75, de même ici que le sommet 72, présentent respectivement le biseau 735, 755, 725 quelque tourné vers la face latérale interne 14, visible sur la figure 10.

Le tronçon externe 73X du flanc 73 présente ainsi la surface de biseau 735 coupant les faces latérales interne 14 et externe 15 selon deux lignes respectives 739 et 736, voir aussi figure 12. La ligne 736 représente ainsi un maximum du gabarit d'occupation transversal, c'est-à-dire en épaisseur, de la dent 71, et la ligne 739 correspond à un minimum de ce gabarit d'occupation au niveau de la face latérale interne 14. Il a de même été dessiné deux lignes intermédiaires 737 et 738, étagées depuis la ligne 736 vers la ligne 739.

Le tronçon externe en regard, 75X, appartenant au flanc 75 présente de même le biseau 755 tourné quelque peu vers la face latérale interne 14, avec des lignes 756, 757, 758, 759 homologues des lignes 736, 737, 738, 739. Il en est de même pour le sommet 72, avec des lignes respectives 726 (gabarit d'occupation maximal), 727, 728, et 729 (gabarit d'occupation minimal).

Les deux tronçons 73I, 73X, respectivement 75I, 75X, de chaque flanc 73, 75 sont séparés par un tronçon intermédiaire 730D, respectivement 750D, qui peut être, comme ici, exempt de biseau.

La figure 13 représente la dent 71 en vue de dessus, c'est-à-dire les biseaux opposés supérieurs. Les deux zones hachurées correspondent aux parties basses respectives des deux surfaces supérieures de biseau, interne 730 et externe 735, c'est-à-dire leur zone proche de la face latérale externe 15 (ligne 734), respectivement interne 14 (ligne 739).

Pour le couplage, et comme évoqué pas haut, les deux bandes de bord de couplage 3 et 3A sont mutuellement disposées verticalement à angle droit, pour que la dent 71 de la figure 10 (en réalité la dent 71A) soit présentée frontalement en regard du tronçon intermédiaire de l'échancrure 81, c'est-à-dire pour que les tronçons externes respectifs 73X, 75X des flancs 73, 75 traversent les découpes 830D, 850D. La dent 71 étant ainsi à moitié engagée, on la fait ensuite pivoter, avec le reste de la bande de bord de couplage 3A, autour d'un axe 100 vertical centré sur les découpes 830D, 850D, pour rabattre les surfaces de biseau externes 735, 755 et 725 de ses tronçons externes 73X, 75X et 72 contre le tronçon interne 81I comportant les surfaces internes en biseau 835, 855 et 825. De façon symétrique par rapport à l'axe 100, les surfaces de biseau internes 730, 750 des tronçons internes 73I, 75I de la dent 71 (en réalité 71A) se trouvent rabattues contre le tronçon externe 81X comportant les surfaces en biseau 830, 850.

On notera que le profil latéral de l'échancrure 81 et de la dent 71 selon les figures 9 et 10 peut ne pas être rectangulaire comme dessiné. En particulier, pour renforcer la résistance à l'écartement mutuel des bandes de bord de couplage 3 et 3A, le tronçon externe 83X de l'embouchure 81 et le tronçon interne correspondant 71I de la dent 71 peuvent présenter un profil en queue d'aronde, c'est-à-dire que les tronçons externes 83X et 85X divergent mutuellement en s'éloignant du bord libre 39.

On peut ainsi coupler les deux bandes de bord de couplage 3 et 3A dans un plan commun, de sorte que le pli arrière 7 peut être omis. L'armoire peut ainsi être de grande largeur tout en étant exempte de relief interne de couplage entre les feuilles 9 et 9A.

## Revendications

1. Feuille (9) de matériau de construction présentant un pli (6) limitant un premier panneau (1) par rapport à un second panneau (2) présentant, à l'opposé du pli (6), une bande de bord de couplage hermaphrodite (3) munie d'une pluralité d'au moins une paire de reliefs de couplage complémentaires (20, 30, 40, 50, 70), respectivement mâle (20, 40) et femelle (30, 50), situés en des positions globalement symétriques par rapport à un plan de symétrie (S) sensiblement à mi-longueur de la bande de couplage (3), pour ainsi permettre un assemblage par couplage tête-bêche d'une paire (9, 9A) de telles feuilles.

2. Feuille de matériau selon la revendication 1, dans laquelle la paire de reliefs de couplage (20, 30) comporte respectivement une languette (21, 22, 23) et une cavité (31) de forme complémentaire, permettant ainsi la réception d'une telle languette (21A, 22A, 23A) de l'autre feuille (1A).

3. Feuille de matériau de construction selon la revendication 2, pour laquelle le dit matériau est déformable élastiquement et la languette (21, 22, 23) comporte un croc latéral formant cliquet anti-retour (24, 25).

4. Feuille de matériau de construction selon l'une des revendications 2 et 3, dans laquelle la languette (21, 22, 23) présente un profil de tranche latérale coudé, avec un pied (22) de déport latéral, la reliant au reste de la bande de bord de couplage (3), et une patte de couplage (23) s'étendant globalement dans un plan sensiblement parallèle à un plan d'extension globale de la bande de bord de couplage (3).

5. Feuille de matériau de construction selon l'une des revendications 1 à 4, dans laquelle les reliefs sont une dentelure (70), constituée par au moins une dent (71) et au moins une échancrure (81) formant l'au moins une paire de reliefs, de bord libre de la bande de couplage (3).

6. Feuille de matériau de construction selon la revendication 5, dans laquelle la dent (71) et l'échancrure (81) présentent un profil latéral en queue d'aronde.

7. Feuille de matériau de construction selon l'une des revendications 5 et 6, dans laquelle la dent (71) et l'échancrure (81), sensiblement de même taille, présentent chacune une surface de tranche (73-74, 75-76 et 83-84, 85-86) s'étendant globalement en biseau selon l'épaisseur, de façon à permettre d'atteindre une position de couplage à imbrication mutuelle par un mouvement d'approche latérale, avec butée à la position de couplage.

8. Feuille de matériau de construction selon la revendication 7, dans laquelle la surface de tranche présente un profil comportant un épaulement (74, 76, 84, 86), sensiblement à mi-épaisseur.

9. Feuille de matériau de construction selon l'une des revendications 1 à 8, dans laquelle les reliefs de couplage (20, 30, 40, 50, 70) comportent en outre un téton (40) et une lumière (50) correspondante formant glissière de guidage (52), pour le centrage de l'autre feuille (9A) par couplage avec respectivement une dite lumière (50A) et un dit téton (40A), afin que les tétons (40, 40A) soient guidés de façon à assurer une fonction de moyeu autour d'un point central (91), de pivotement relatif entre les deux bandes de bord de couplage (3, 3A), pour ainsi définir, pour chaque ensemble constitué par un relief mâle (22, 23 ou 22A, 23A) de l'une quelconque des deux feuilles (9, 9A) et le relief femelle correspondant (31A, 33A ou 31, 33) de l'autre feuille (9A, 9), la position d'un arc de balayage les amenant en position de couplage.

10. Feuille de matériau de construction selon la revendication 9, dans laquelle le téton (40) comporte un tronçon de cou (41) portant une tête (42) de formé agencée pour se coupler à une telle lumière (50A, 50) par traversée, d'une face (15A) à l'autre (14A), d'une extrémité d'entrée élargie (51A, 51) d'une dite telle lumière (50A, 50) et agencée pour rester prisonnière, du côté de la dite autre face (14A) d'une telle dite lumière (50A, 50) lorsque le tronçon de cou (41) glisse dans un tronçon constituant une telle dite glissière de guidage (52A, 52).

11. Feuille de matériau de construction selon l'une des revendications 5 et 6, dans laquelle l'au moins une dent (71) et l'au moins une échancrure (81) comportent deux tronçons respectifs (71I, 71X et 81X, 81I) limités par respectivement deux flancs (73I, 73X), respectivement deux bords latéraux (83X, 85I), présentant deux surfaces de biseau (730, 735, respectivement 830, 835) s'étendant selon des angles de signes opposés par rapport à un plan d'extension de la feuille (9).

12. Feuille de matériau de construction selon l'une des revendications 1 à 11, dans laquelle la bande de bord de couplage (3) est rabattue à environ 90 degrés par rapport au reste du second panneau (2).

13. Feuille de matériau de construction selon l'une des revendications 1 à 11, dans laquelle la bande de bord de couplage (3) s'étend sensiblement dans un plan d'extension du second panneau (2).

14. Feuille de matériau de construction selon l'une des revendications 1 à 13, comportant des reliefs (12) de support d'étagère.

15. Armoire comportant deux feuilles de matériau de construction (9, 9A) selon l'une des revendications 1 à 14, comportant un élément (18) de maintien de la dite feuille (9) et de l'autre feuille (9A) en position de couplage.

16. Armoire selon la revendication 15, dans laquelle l'élément de maintien (18) est agencé pour inhiber, au moins localement, tout glissement de découplage entre les feuilles (9, 9A).

17. Armoire selon l'une des revendications 15 et 16, dans laquelle l'élément de maintien est une coiffe (18) constituant un bandeau de l'armoire.

## Claims

1. Sheet (9) of construction material having a fold (6) limiting a first panel (1) relative to a second panel (2) having, opposite the fold (6), a hermaphrodite coupling edge strip (3) provided with a plurality of at least one pair of complementary coupling reliefs (20, 30, 40, 50, 70), respectively male (20, 40) and female (30, 50), located at positions generally symmetrical with respect to a plane of symmetry (S) substantially at mid-length of the coupling strip (3), so to allow assembly by head-to-tail coupling of a pair (9, 9A) of such sheets.

2. Sheet of material according to claim 1, wherein the pair of coupling reliefs (20, 30) respectively comprises a tongue (21, 22, 23) and a cavity (31) of complementary shape, allowing the receipt of such a tongue (21A, 22A, 23A) of the other sheet (1A).

3. Sheet of construction material according to claim 2, wherein said material is elastically deformable and the tongue (21, 22, 23) has a lateral hook forming a non-return pawl (24, 25).

4. Sheet of construction material according to one of Claims 2 and 3, wherein the tongue (21, 22, 23) has a bent side edge profile, with a foot (22) of lateral offset, connecting it to the rest of the coupling edge strip (3), and a coupling bracket (23) extending generally in a plane substantially parallel to a general plane of extension of the coupling edge strip (3).

5. Sheet of construction material according to one of claims 1 to 4, in which the reliefs are a denticulation (70), constituted by at least one tooth (71) and at least one scalloping (81) forming the at least one pair of reliefs, with a free edge of the coupling edge strip (3).

6. Sheet of construction material according to claim 5, wherein the tooth (71) and the scalloping (81) have a dovetail side profile.

7. Sheet of construction material according to one of claims 5 and 6, wherein the tooth (71) and the scalloping (81), substantially of the same size, each having an edge surface (73-74, 75-76 and 83-84, 85-86) extending generally sloping towards thickness, so as to achieve a coupling position by a mutual intersecting through a lateral approach movement, with abutment at the coupling position.

8. Sheet of construction material according to claim 7, wherein the edge surface has a profile having a shoulder (74, 76, 84, 86), substantially at mid-thickness thereof.

9. Sheet of construction material according to one of claims 1 to 8, wherein the coupling reliefs (20, 30, 40, 50, 70) further comprise a pin (40) and a corresponding light (50) forming a guide slideway (52), for centering of the other sheet (9A) by coupling with respectively a said light (50A) and a said pin (40A), so that the pins (40, 40A) are guided so as to ensure the function of a hub around a central point (91), for relative pivoting between the two coupling edge strips (3, 3A), thereby defining, for each group consisting of a male relief (22, 23 or 22A, 23A ) of either one of the two sheets (9, 9A) and the corresponding female relief (31A, 33A or 31, 33) of the other sheet (9A, 9), the position of an arc of sweep, bringing them into a coupling position.

10. Sheet of construction material according to claim 9, wherein the pin (40) has a neck section (41) carrying a head (42) shaped so as to become coupled to a said light (50A, 50) by the crossing, from one face (15A) to the other (14A), of an enlarged introductory end (51A, 51) of a said such light (50A, 50) and arranged to remain trapped, on the side of said other face (14A) of a said light (50A, 50) when the neck section (41) slides in a section constituting a said guiding slideway (52A, 52).

11. Sheet of construction material according to one of Claims 5 and 6, wherein the at least one tooth (71) and the at least one scappeling (81) comprise two respective sections (711, 71X and 81X, 811) limited respectively by two flanks (731, 73X), respectively two lateral edges (83X, 851), having two slopping edges (730, 735, respectively 830, 835) extending at angles of opposite signs with respect to a plane of extension of the sheet (9).

12. Sheet of construction material according to one of claims 1 to 11, wherein the coupling edge strip (3) is folded at about 90 degrees relative to the rest of the second panel (2).

13. Sheet of construction material according to one of claims 1 to 11, wherein the coupling edge strip (3) extends substantially in a plane of extension of the second panel (2).

14. Sheet of construction material according to one of claims 1 to 13, comprising reliefs (12) for supporting shelves.

15. Cabinet comprising two sheets of construction material (9, 9A) according to one of claims 1 to 14, comprising an element (18) for holding said sheet (9) and the other sheet (9A) in a position of coupling.

16. Cabinet of claim 15, wherein the holding element (18) is arranged to inhibit, at least locally, any sliding for decoupling between the sheets (9, 9A).

17. Cabinet according to one of claims 15 and 16, wherein the holding element is a cap (18) constituting a strip of the cabinet.

## Patentansprüche

1. Platte (9) aus Baumaterial, die einen Knick (6) aufweist, der ein erstes Feld (1) gegenüber einem zweiten Feld (2) abgrenzt, die gegenüber dem Knick (6) ein Seitenband mit Zwitterkopplung (3) aufweist, das mit einer Mehrzahl von mindestens einem Paar komplementärer Verbindungsreliefs (20, 30, 40, 50, 70) männlich (20, 40) beziehungsweise weiblich (30, 50) versehen ist, die an Positionen angeordnet sind, die im Allgemeinen symmetrisch zu einer Symmetrieebene (S) verlaufen, welche sich ungefähr auf halber Länge von dem Verbindungsband (3) befindet, um auf diese Weise eine Verbindung durch entgegengesetzte Kopplung eines Paares (9, 9a) derartiger Platten zu ermöglichen.

2. Materialplatte nach Anspruch 1, wobei das Paar Verbindungsreliefs (20, 30) eine Zunge (21, 22, 23) beziehungsweise eine Vertiefung (31) aufweist, die sich ergänzen, so dass auf diese Weise die Aufnahme einer derartigen Zunge (21A, 22A, 23A) der anderen Platte (1A) möglich ist.

3. Platte aus Baumaterial nach Anspruch 2, wobei das Material elastisch verformbar ist und die Zunge (21, 22, 23) einen seitlichen Haken aufweist, der eine Rückschlagsperre (24, 25) bildet.

4. Platte aus Baumaterial nach einem der Ansprüche 2 und 3, wobei die Zunge (21, 22, 23) ein gekrümmtes Kantenprofil mit einem seitlichen Versatzstück (22) aufweist, das sie mit dem restlichen Teil des Verbindungsbandes (3) verbindet, und einer Verbindungslasche (23), die sich allgemein in einer im Wesentlichen parallelen Ebene zu einer Ebene der allgemeinen Ausdehnung des Verbindungsbandes (3) erstreckt.

5. Platte aus Baumaterial nach einem der Ansprüche 1 bis 4, wobei die Reliefs eine Auszackung (70) aufweisen, die aus mindestens einem Zahn (71) und mindestens einem Einschnitt (81) gebildet sind, die das mindestens eine Paar Reliefs bilden, mit freiem Rand des Verbindungsbandes (3).

6. Platte aus Baumaterial nach Anspruch 5, wobei der Zahn (71) und der Einschnitt (81) ein seitliches Schwalbenschwanzprofil aufweisen.

7. Platte aus Baumaterial nach einem der Ansprüche 5 und 6, wobei der Zahn (71) und der Einschnitt (81), die ungefähr dieselbe Größe aufweisen, jeweils eine Schnittfläche (73-74, 75-76 und 83-84, 85-86) aufweisen, die sich allgemein je nach Dicke abgeschrägt erstreckt, so dass durch eine Bewegung der seitlichen Annäherung eine Position der Kopplung mit gegenseitiger Verzahnung mit Anschlag in der Kopplungsposition erreicht werden kann.

8. Platte aus Baumaterial nach Anspruch 7, wobei die Schnittfläche ein Profil aufweist, das ungefähr auf halber Stärke einen Vorsprung (74, 76, 84, 86) aufweist.

9. Platte aus Baumaterial nach einem der Ansprüche 1 bis 8, wobei die Kopplungsreliefs (20, 30, 40, 50, 70) ferner einen Zapfen (40) und ein entsprechendes Schlitzloch(50), das eine Führungsschiene (52) bildet, aufweisen, zur Zentrierung der anderen Platte (9A) durch Kopplung mit einem Schlitzloch (50A) und einem Zapfen (40A), damit die Zapfen (40, 40A) so geführt werden, dass eine Funktion als Nabe um einen Mittelpunkt (91) gewährleistet wird, mit relativer Schwenkbewegung zwischen den beiden Verbindungsbändern (3, 3A), um auf diese Weise für jede aus einem Männlichrelief (22, 23 oder 22A, 23A) einer der beiden Platten (9, 9A) und dem entsprechenden Weiblichrelief (31A, 33A oder 31, 33) der anderen Platte (9A, 9) gebildeten Einheit die Position eines Abtastbogens festzulegen, der sie in die Kopplungsposition bringt.

10. Platte aus Baumaterial nach Anspruch 9, wobei der Zapfen (40) einen Halsabschnitt (41) aufweist, der einen Kopf (42) trägt, dessen Form so angeordnet ist, dass er sich durch Durchführung von einer Fläche (15A) zur anderen (14A) mit einem Schlitzloch (50A, 50) verbindet, mit einem verbreiterten Eintrittsende (51A, 51) eines derartigen Schlitzlochs (50A, 50), und so angeordnet, dass er auf der Seite der anderen Fläche (14A) eines derartigen Schlitzlochs (50A, 50) fest sitzen bleibt, wenn der Halsabschnitt (41) in einem Abschnitt gleitet, der eine derartige Führungsschiene (52A, 52) bildet.

11. Platte aus Baumaterial nach einem der Ansprüche 5 und 6, wobei der mindestens eine Zahn (71) und der mindestens eine Einschnitt (81) jeweils zwei Abschnitte (71I, 71X und 81X, 81I) aufweisen, die durch jeweils zwei Seitenteile (731, 73X) beziehungsweise zwei Seitenwände (83X, 85I) begrenzt sind, die zwei abgeschrägte Flächen (730, 735 beziehungsweise 830, 835) aufweisen, die sich gemäß Winkeln erstrecken, die sich im Verhältnis zu einer Ausdehnungsebene der Platte (9) gegenüber liegen.

12. Platte aus Baumaterial nach einem der Ansprüche 1 bis 11, wobei das Verbindungsband (3) um etwa 90 Grad in Bezug auf den Rest des zweiten Feldes (2) umgeschlagen ist.

13. Platte aus Baumaterial nach einem der Ansprüche 1 bis 11, wobei das Verbindungsband (3) sich im Wesentlichen in einer Ausdehnungsebene des zweiten Feldes (2) erstreckt.

14. Platte aus Baumaterial nach einem der Ansprüche 1 bis 13, die Reliefs (12) als Fachbodenträger aufweist.

15. Schrank mit zwei Platten aus Baumaterial (9, 9A) nach einem der Ansprüche 1 bis 14, der ein Element (18) zum Halten der Platte (9) und der anderen Platte (9A) in Kopplungsposition aufweist.

16. Schrank nach Anspruch 15, wobei das Halteelement (18) angeordnet ist, um zumindest lokal jegliches Gleiten mit Entkoppelung zwischen den Platten (9, 9A) zu verhindern.

17. Schrank nach einem der Ansprüche 15 und 16, wobei das Halteelement ein Deckblech (18) ist, das eine Verkleidung des Schranks darstellt.
